# EUROPEAN PATENT SPECIFICATION

(11) **EP 3 467 013 B1**
(45) Date of publication and mention of the grant of the patent: **16.07.2025**
(21) Application number: 17806166.9
(22) Date of filing: 30.03.2017
(51) Int. Cl.: C08J 5/24, C08F 290/06, C08F 299/06

(54) **PREPREG SHEET, AND PROCESS FOR PRODUCING FIBER-REINFORCED COMPOSITE MATERIAL**
PREPREG-FOLIE UND VERFAHREN ZUR HERSTELLUNG EINES FASERVERSTÄRKTEN VERBUNDSTOFFES
FEUILLE DE PRÉIMPRÉGNÉ ET PROCÉDÉ DE PRODUCTION D'UN MATÉRIAU COMPOSITE RENFORCÉ PAR DES FIBRES

(30) Priority: 30.05.2016 JP 2016107930
(43) Date of publication of application: 10.04.2019
(73) Proprietor: Mitsubishi Gas Chemical Next Company, Inc., Minato-ku Tokyo 105-7116 (JP)
(72) Inventor: MOROIWA, Tetsuji, Hiratsuka-city Kanagawa 254-0016 (JP); ISHINE, Nozomi, Hiratsuka-city Kanagawa 254-0016 (JP)
(74) Representative: Studio Torta S.p.A.
(86) International application number: PCT/JP2017/013330
(87) International publication number: WO 2017/208605

(56) References cited:
- EP-A1- 2 952 532
- EP-A1- 3 378 887
- EP-A1- 3 434 718
- JP-A- 2013 245 268
- JP-A- 2016 029 133
- JP-A- 2016 029 133
- JP-A- H09 169 862
- JP-B2- S5 853 010

## Description

### Technical Field

The present invention relates to a prepreg sheet and a method of manufacturing a fiber-reinforced composite material, and in particular to a prepreg sheet having excellent mechanical strength and a method of manufacturing a fiber-reinforced composite material using the prepreg sheet.

### Background Art

Fiber Reinforced Plastics (FRP) are used in various fields because of their light weight, high strength and long life. Especially FRP using carbon fiber and aramid fiber is lightweight and high strength such that it is widely used such as aircraft and automobile parts, concrete reinforcement material, sports equipment and so on.

While there are several methods for manufacturing FRP, autoclave molding, oven molding, press molding, sheet winding molding and the like as molding using a prepreg sheet impregnated with a resin composition are recognized. A molded article using a prepreg sheet is characterized by excellent mechanical strength because it contains a large amount of fiber.

On the other hand, urethane (meth) acrylate compounds are known to be excellent in the adhesion to carbon fibers and are used as sizing agents for carbon fibers (Japanese Unexamined Patent Application Publication H11-200252). Further, since the urethane (meth) acrylate compounds have favorable bonding properties with reinforcing fibers, it is proposed to use the urethane (meth) acrylate compounds as a mixture with a resin wherein the adhesion to the reinforcement fiber is inferior (e.g., Japanese Unexamined Patent Application Publication S62-292839). Other fiber reinforced resins or prepreg are disclosed in EP2952532, EP3378887, EP3434718, JP2016029133 and JP2013245268.

### Disclosure of the Invention

### Problems to be resolved by the invention

However, since the urethane (meth) acrylate compound described in JPH11-200252 and JPS62-292839 cannot obtain sufficient mechanical properties when it is formed into a composite material with reinforcing fiber, there is a problem that it is difficult to obtain a molded article having practical mechanical strength.

Further, as the matrix resin of the prepreg sheet, while there are epoxy resin, unsaturated polyester resin, vinyl ester resin, phenol resin and the like, there is no matrix resin satisfying the balance of FRP mechanical properties, curability, surface property and others in the present situation. For example, a prepreg sheet having an epoxy resin as a matrix is excellent in mechanical properties on one hand, there is a problem that it requires a high temperature and a long time at the time of curing and poor storability on the other hand. Vinyl ester resin and unsaturated polyester resin which have excellent curability and storage properties have a problem of insufficient mechanical properties.

Accordingly, it is an object of the present invention to provide a prepreg sheet including a radical polymerizable resin composition which solves the above-mentioned problems, gives excellent FRP mechanical properties, and is excellent in curability and storability.

### Means of solving the problems

In view of the above object, the present inventors have made an intensive investigation and, as a result, have found that a radical polymerizable resin composition containing a urethane (meth) acrylate compound containing an isocyanate group and an ethylenically unsaturated group is suitable for a radical polymerizable resin composition for a prepreg sheet.

In particular, according to the present invention it is provided a prepreg sheet according to claim 1 and a method for manufacturing a fiber-reinforced composite material according to claim 4.

Further, in a preferred embodiment of the prepreg sheet of the present invention, the chemical formula [Chemical 1] is represented by the following chemical formula [Chemical 4]: 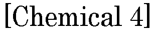 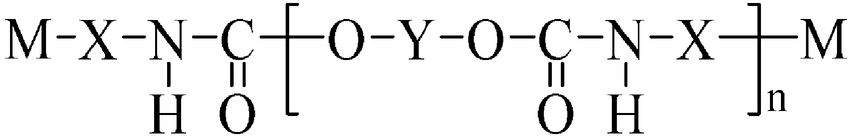 in the formula, wherein n is within a range from 1 to 5000, X is a compound residue having two or more isocyanate groups, Y is an alcohol compound residue having two or more hydroxyl groups and M contains at least formula [Chemical 5]:

[Chemical 5] -N=C=O

and other than the above formula [Chemical 5] M is formula [Chemical 6]: 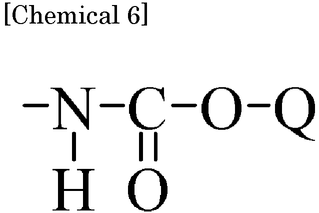 Moreover, in the formula [Chemical 6], Q represents a mono alcohol compound residue containing ethylenically unsaturated groups).

Further, in a preferred embodiment of the prepreg sheet of the present invention, the prepreg sheet is characterized in that the urethane (meth) acrylate compound (a) contains 0.1 to 12 percent by weight of an isocyanate group.

Further, the prepreg sheet is characterized in that the amount of the polymerizable vinyl monomer in the radical polymerizable resin composition is 0 to 50 percent by weight.

Further, in a preferred embodiment of the prepreg sheet of the present invention, the prepreg sheet is characterized in that the polymerizable vinyl monomer in the radical polymerizable resin composition includes one or more kinds selected from phenoxyethyl methacrylate, benzyl methacrylate, isobornyl methacrylate, tricyclodecanedimethanol dimethacrylate.

Further, the method of producing a fiber-reinforced composite material of the present invention is characterized by including a step of curing the prepreg sheet of the present invention.

### Effect of Invention

According to the present invention, it has an advantage effect that a fiber reinforced composite material excellent in mechanical properties, a radical polymerizable resin composition excellent in curability, and a prepreg sheet excellent in storability can be obtained.

### Brief Description of the Drawings

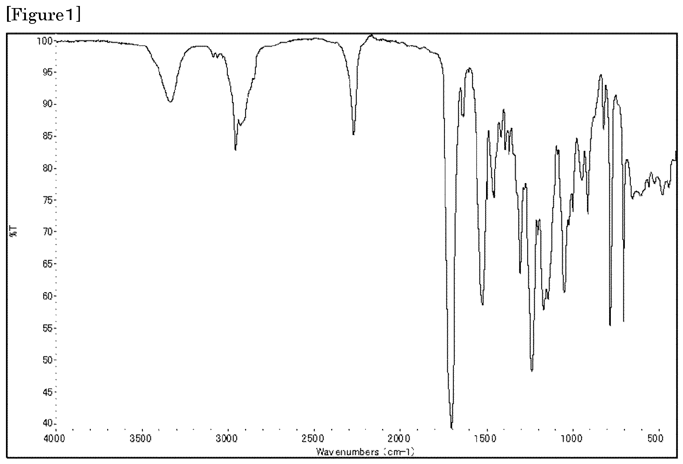

Figure 1 illustrates an IR spectrum of a urethane (meth) acrylate compound (a) having isocyanate groups and ethylenically unsaturated groups according to an embodiment of the present invention (those of synthesis example 1 in the Example as described later), in which the absorption by the isocyanate groups can be confirmed in the vicinity of 2270 cm⁻¹.

### Mode for Carrying Out the Invention

Hereinafter, embodiments of the present invention will be described in detail. In addition, in the present invention, "(meth) acrylate" refers to "acrylate" and "methacrylate". Similarly, (meth) acrylic acid ester refers to "acrylic acid ester" and "methacrylic acid ester".

### <Urethane (Meth) Acrylate Resin Component (a)>

At first, the urethane (meth) acrylate component (a) (hereinafter also referred to as component (a)) constituting the radical polymerizable resin composition contained in the prepreg sheet will be described.

Component (a) may be a urethane (meth) acrylate compound (a) represented by the following chemical formula [Chemical 7]: [Chemical 7] 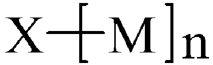 (Note that in formula [Chemical 7], n is within a range from 2 to 100, X is a compound residue having two or more isocyanate groups M, and M at least contains formula [Chemical 8]: [Chemical 8]

-N=C=O

and a formula [Chemical 9]: [Chemical 9] 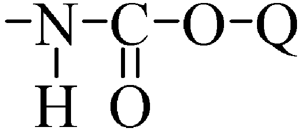 Moreover, in formula [Chemical 9], Q represents a residue of a hydroxyl group containing (meth) acrylate ester and the radical polymerizable resin composition further contains a polymerizable vinyl monomer in an amount of 0 to 50 percent by weight and wherein the urethane (meth) acrylate compound (a) contains 0.1 to 12 percent by weight of an isocyanate group.

Further, as another aspect of the present invention, compound (a) may contain at least a urethane (meth) acrylate compound represented by the following chemical formula [Chemical 10]. 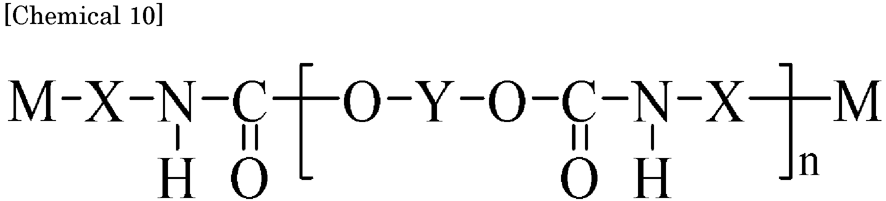 In [Chemical 10], n is within a range from 1 to 5000, X is a compound residue having two or more isocyanate groups, Y is an alcohol compound residue having two or more hydroxyl groups and M at least contains formula [Chemical 11]:

[Chemical 11] -N=C=O

and other than the above formula [Chemical 5] M is formula [Chemical 6]: 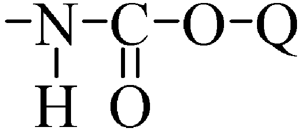 Moreover, in formula [Chemical 12], Q represents a mono alcohol compound residue containing ethylenically unsaturated groups.

In the present invention, the compound expressed by the above mentioned [Chemical 7] may be obtained by reacting a compound having two or more isocyanate groups with a mono alcohol compound containing ethylenically unsaturated groups.

Moreover, in the present invention, the compound expressed by the above mentioned [Chemical 10] may be obtained by reacting a compound having two or more isocyanate groups, a mono alcohol compound containing ethylenically unsaturated groups, and an alcohol compound having two or more hydroxyl groups.

During synthesis of the compounds expressed by [Chemical 7] and [Chemical 10], the molar number of the isocyanate groups derived from the isocyanate compound is set to be greater than the total molar number of the hydroxyl groups derived from the mono alcohol compound containing ethylenically unsaturated groups, and the alcohol compound having two or more hydroxyl groups.

With respect to the synthesis reaction temperature, from the viewpoint of preventing gelation during synthesis by the ethylenically unsaturated groups, it is preferable for the reactions to be conducted in a temperature range from 40 °C to 140 °C, and more preferably a temperature range from 70 °C to 110 °C.

The amount of time required for the synthesis reactions is preferably until the amount of residual isocyanate groups becomes constant, that is, until the hydroxyl groups are consumed. The endpoints of the reactions may be confirmed by quantifying the isocyanate groups by titration or by tracking the absorption of the isocyanate groups (in the vicinity of 2270 cm⁻¹) within an infrared (hereinafter, abbreviated as IR) absorption spectrum.

During the reactions, it is possible to conduct synthesis in a system where a polymerizable monomer or organic solvent that does not react with isocyanate groups is added as necessary. Known catalysts and polymerization inhibitors may be employed.

An acidic catalyst or a basic catalyst may be utilized as the catalyst. Tin compounds such as dibutyl tin dilaurate and dibutyl tin diacetate having high activity are preferable. From the viewpoint of storage stability, the amount of the catalyst to be added may be within a range from 0 ppm to 200 ppm, preferably 0 ppm to 100 ppm, and more preferably 0 ppm to 50 ppm with respect to the loading weight.

It is preferable for the isocyanate groups to be contained in the component (a) within a range from 0.1 percent by weight to 12 percent by weight, and more preferably within a range from 0.3 percent by weight to 8 percent by weight. If the isocyanate group content is less than 0.1 percent by weight, close adhesive properties with the carbon fibers will be inferior, and there is a possibility that sufficient compressive strength and interlayer shear strength will not be obtained. If the isocyanate group content is greater than 12 percent by weight, bending strength and tensile strength will decrease, and there is a possibility that mechanical properties will become unbalanced.

An equivalent weight of the ethylenically unsaturated groups of the urethane (meth) acrylate compound contained in the component (a) is not particularly limited. However, if the amount is greater than 1500 g/eq, the balance of mechanical properties (bending strength, tensile strength, compressive strength, and interlayer shear strength) will become poor, and there is a possibility that the heat resistant properties of the molded article will be reduced.

### <Isocyanate Compound>

Examples of the isocyanate compound having two or more isocyanate groups may include aromatic isocyanate compounds such as 1,3-xylylene diisocyanate, 2,4-tolylene diisocyanate, 2,6-tolylene diisocyanate, 4,4'-diphenyl diisocyanate, 1,5 naphthalene diisocyanate, 4,4'-diphenylmethane diisocyanate, polymethylene polyphenyl polyisocyanate, and m- tetramethyl xylene diisocyanate, alicyclic isocyanate compounds such as hydrogenated xylylene diisocyanate (1,3-bis (isocyanatomethyl) cyclohexane), isophorone diisocyanate, norbornene diisocyanate, dicyclohexylmethane diisocyanate, hydrogenated methylene bis-phenylene diisocyanate, 1,4-cyclohexane diisocyanate, aliphatic isocyanate compounds such as 1,6-hexamethylene diisocyanate and trimethylene diisocyanate, trifunctional isocyanate in which bifunctional isocyanate compounds have trimer isocyanurate rings, and isocyanate prepolymers modified with a commercially available polyol. These isocyanate compounds may be used alone or may be used in combinations of two or more. Alicyclic isocyanate compounds are preferable from the viewpoints of heat resistance, weather resistance, and storage stability.

### <Alcohol Compound>

Examples of the alcohol compound having two or more hydroxyl groups may include aliphatic alcohols, etherified diphenols, and polyester polyols.

Examples of chain aliphatic alcohols may include ethylene glycol, 1,2-propanediol, 1,3-propanediol, 1,2-butanediol, 1,3-butanediol, 1,4-butanediol, 2, 3-butanediol, 1,4-butenediol, 2-methyl-1,3-propanediol, 1,5-pentanediol, neopentyl glycol, 2-ethyl-2-methylpropan-1,3-diol, 2-butyl-2-ethylpropan-1,3-diol, 1,6-hexanediol, 3-methyl-1,5-pentanediol, 2-ethyl-1,3-hexanediol, 2,4-dimethyl-1, 5-pentanediol, 2,2,4-trimethyl-1,3-pentanediol, 1,7 - heptane diol, 1,8-octane diol, 1,9-nonanediol, 1,10-decanediol, diethylene glycol, triethylene glycol, dipropylene glycol, polypropylene glycol, and polyethylene glycol. Examples of cyclic aliphatic alcohols may include hydrogenated bisphenol A, tricyclodecanedimethanol, and spiro glycol. Among these, utilization of 1,3-propanediol, 1,4-butanediol, 1,5-pentanediol, and 1,6-hexanediol is preferred from the viewpoints of resin viscosity and/or the mechanical properties of a cured product.

Examples of etherified diphenols may include diols which are obtained by an addition reaction of bisphenol A with alkylene oxide, and diols which are obtained by bromination of bisphenol A and additives of alkylene oxide. It is preferable for the alkylene oxide to be ethylene oxide or propylene oxide, and for the average added molar number of the alkylene oxide to be within a range from 2 to 16 moles with respect to 1 mole of bisphenol A.

Examples of the polyester polyol may include those obtained by polycondensing unsaturated and/or saturated acids, the aforementioned aliphatic alcohols, and etherified diphenol. Examples of the unsaturated acids may include maleic anhydride, maleic acid, and fumaric acid. Examples of the saturated acid may include phthalic acid, terephthalic acid, isophthalic acid, 1,4-cyclohexanedicarboxylic acid, adipic acid, succinic acid, sebacic acid, alkyl succinic acids, alkenyl succinic acid, itaconic acid, biphenyl dicarboxylic acid, naphthalene dicarboxylic acid, 5-tert-butyl-1,3-benzenedicarboxylic acid and acid anhydrides thereof, and ester-forming derivatives such as lower alkyl esters and acid halides. From the viewpoints of resin viscosity and the mechanical properties of the cured product, a polyester polyol obtained by polycondensing one or more selected from terephthalic acid, isophthalic acid, and ester-forming derivatives thereof with one or more selected from 1,3-propanediol, 1,4-butanediol, 1,5 pentanediol, and 1,6-hexanediol is particularly preferred.

These alcohol compounds may be used alone or in combinations of two or more. Further, trivalent or higher polyols may be used within a range that does not negatively affect the effects of the present invention. Examples of the trivalent or higher polyols may include glycerin, trimethylol ethane, trimethylol propane, and pentaerythritol. These may be used alone or in combinations of two or more.

### <Mono alcohol Compound containing Ethylenically Unsaturated Group>

The mono alcohol compound containing an ethylenically unsaturated group refers to a hydroxyl group containing (meth) acrylate ester. Examples of hydroxyl group containing (meth) acrylate esters may include 2-hydroxyethyl (meth) acrylate, 3-hydroxypropyl (meth) acrylate, 4-hydroxybutyl (meth) acrylate, polyethylene glycol mono (meth) acrylate, polypropylene glycol mono (meth) acrylate, trimethylolpropane di (meth) acrylate, pentaerythritol tri (meth) acrylate, dipentaerythritol penta (meth) acrylate, and diacrylated isocyanurate.

The mono alcohol compound containing an ethylenically unsaturated group may be used alone or in combinations of two or more. Moreover, among these mono alcohol compounds containing an ethylenically unsaturated group, 2-hydroxyethyl (meth) acrylate is preferable from the viewpoint of resin viscosity and the mechanical properties of the cured product. Further, when heat resistance is required, pentaerythritol tri (meth) acrylate may be preferable.

As the polymerization inhibitor, polyhydric phenol series polymerization inhibitors such as hydroquinone, p-benzoquinone, methylhydroquinone, and trimethyl hydroquinone, heterocyclic compounds such as phenothiazine, and nitroxyl radicals such as 2,2,6,6-tetramethylpiperidine 1-oxyl may be utilized. The amount of the polymerization inhibitor to be added is preferably within a range from 100 ppm to 2000 ppm with respect to the loading weight, from the viewpoint of preventing gelation during synthesis by ethylenically unsaturated groups and polymerizable monomers.

### <Radical Polymerizable Resin Composition>

The radical polymerizable resin composition of the present invention may mean a resin composition for preparing a prepreg sheet, and may comprise a urethane (meth) acrylate compound (a), a polymerizable monomer, a curing agent, and an accelerator. Among these, the polymerizable monomer can be blended according to the tackiness required for the prepreg sheet. Tackiness can mean the degree of stickiness of a surface of a sheet.

For a prepreg sheet, a required tackiness (degree of stickiness of a surface of a sheet) will vary by a molding method. There is a considerable range in degree of the tackiness from the state that stringing occurs, the state sticky enough to be stuck on a vertical part, to the state where sheets do not stick at all when put on each other. The tackiness will significantly vary depending on the type and amount of the polymerizable vinyl monomer to be used, and the takiness may be appropriately set.

Further, the amount of the polymerizable vinyl monomer or the like required varies depending on the molecular weight of the urethane acrylate resin, and is not particularly limited.

Further, the polymerizable monomer is preferably one which does not react with the isocyanate group at room temperature. Examples of polymerizable monomers that do not react with isocyanate groups at room temperature may include a vinyl monomer, a monofunctional acrylic acid ester, and polyfunctional acrylic acid esters. If a polymerizable monomer that reacts with isocyanate groups is blended into the radical polymerizable resin composition, the polymerizable monomer and the isocyanate groups will react during storage and the radical polymerizable resin composition will increase the viscosity. This will result in the possibility of workability deteriorating and sufficient mechanical properties not being obtained. Examples of the vinyl monomer may include: styrene, vinyl toluene, alphamethyl styrene, and vinyl acetate. Further, examples of the monofunctional acrylic acid esters may include: methyl methacrylate, benzyl (meth) acrylate, n-butyl (meth) acrylate, i-butyl (meth) acrylate, t-butyl (meth) acrylate, 2-ethylhexyl (meth) acrylate, tetrahydrofurfuryl (meth) acrylate, lauryl (meth) acrylate, tridecyl (meth) acrylate, stearyl (meth) acrylate, 2-methoxyethyl (meth) acrylate, 2-ethoxyethyl (meth) acrylate, cyclohexyl (meth) acrylate, isobornyl (meth) acrylate, norbornyl (meth) acrylate, dicyclopentenyl (meth) acrylate, and dicyclopentenyl oxyethyl (meth) acrylate, phenoxyethyl (meth) acrylate and the like. Examples of the polyfunctional acrylate esters may include ethylene glycol di (meth) acrylate, 1,3-propanediol di (meth) acrylate, 1,4-butanediol di (meth) acrylate, neopentyl glycol di (meth) acrylate, diethylene glycol di (meth) acrylate, tripropylene di (meth) acrylate, norbornene dimethanol di (meth) acrylate, tricyclodecane dimethanol (meth) acrylate, ethylene oxide-added bisphenol A di (meth) acrylate, propylene oxide-added bisphenol A di (meth) acrylate, trimethylolpropane tri (meth) acrylate, and tris (2-(meth) acryloyloxyethyl) isocyanurate. These polymerizable monomers may be used alone or in combinations of two or more.

From the viewpoints of tackiness and mechanical properties of the prepreg sheet, polymerizable monomer may be preferable which include any of aromatic, aliphatic or isocyanurate ring such as styrene, benzyl methacrylate, tetrahydrofurfuryl methacrylate, cyclohexyl methacrylate, isobornyl methacrylate, norbornyl methacrylate, dicyclopentenyl methacrylate, dicyclopentenyloxyethyl methacrylate, phenoxyethyl methacrylate and polyfunctional acrylic acid ester such as ethylene glycol dimethacrylate, norbornene dimethanol dimethacrylate, tricyclodecane dimethanol dimethacrylate, ethylene oxide added bisphenol A dimethacrylate, propylene oxide added bisphenol A dimethacrylate, tris ( 2-acryloyloxyethyl) isocyanurate and the like.

Further, in a preferred embodiment of the prepreg sheet of the present invention, the polymerizable vinyl monomer in the radical polymerizable resin composition may be chosen from one or more kinds of phenoxyethyl methacrylate, benzyl methacrylate, isobornyl methacrylate, and tricyclodecanedimethanol dimethacrylate. In terms of the balance of mechanical properties, application of phenoxyethyl methacrylate, benzyl methacrylate, and styrene may be specifically preferable. In terms of heat resistance, isobornyl methacrylate, and tricyclodecanedimethanol dimethacrylate may be specifically preferable. The compounding amount of the polymerizable vinyl monomer may be adjusted in accordance with the tackiness (stickiness on a surface of a sheet: depending on a molding method) required for prepreg, and it may be preferably in the range of 0 percent to 50 percent by weight. Further, when the molecular weight of the urethane acrylate is between 500 and 1,500, the compounding amount may be preferably in the range between 0 and 25 percent by weight in terms of tackiness and physical properties of a molded product. On the other hand, if the compounding amount exceeds 50 percent by weight, the urethane acrylate component decreases, which may not be preferable because of the risk of adverse effects on the qualities of the prepreg and the properties of the molded product.

As a curing agent that may be used in the radical polymerizable resin composition included in the prepreg sheet of the present invention, an organic peroxide type is exemplified. Examples of organic peroxide series curing agents may include ketone peroxides series such as methyl ethyl ketone peroxide and acetyl acetone peroxide, diacyl peroxides series such as benzoyl peroxide, peroxy esters series such as t-butyl peroxybenzoate, hydroperoxides series such as cumene hydroperoxide, and dialkyl peroxides series such as dicumyl peroxide, peroxydicarbonate series such as bis (4-tertiary butyroylhexyl) peroxydicarbonate and the like. The agent may be appropriately chosen based on molding temperature and storage temperature for a prepreg sheet, and may be used alone or in combination of two or more. The amount of the curing agent to be added may be within a range from 0.05 parts by weight to 5 parts by weight based on 100 parts by weight of the radical polymerizable resin composition.

The radical polymerizable resin composition included in the prepreg sheet of the present invention may comprise an accelerator for promoting adhesion to fibers. Specific examples of the accelerator may be dibutyltin dilaurate, dibutyltin diacetate, dibutyltin sulfide, stannous octoate and the like, but the accelerator shall not limited thereto as long as they accelerate the urethanization reaction. The addition amount of the accelerator may be between 0.01 parts by weight and 1.0 parts by weight based on 100 parts by weight of the radical polymerizable resin composition.

The radical polymerizable resin composition included in a prepreg sheet of the present invention may be blended with inorganic particles or rubber particles in order to adjust visco-elasticity of the composition. Examples of the inorganic particles may be, but are not limited to, calcium carbonate, alumina, talc, titanium oxide, silica and the like. The rubber component is not particularly limited, but may be crosslinked rubber particles, and core shell rubber particles in which the rubber component is wrapped with a crosslinked polymer. The amount of a blend of the particles may be between 5 percent by weight and 50 percent by weight, preferably between 10 percent by weight and 30 percent by weight, depending on the viscosity of the resin to be used.

Additionally, the prepreg sheet of the present invention will be described. The fibers (also referred to as reinforcing fibers) used in the prepreg sheet of the present invention may be, but are not limited to, carbon fiber, glass fiber, aramid fiber, zylon fiber, vinylon fiber, polyethylene fiber, boron fiber, basalt fiber, cellulose and the like. Further, the reinforcing fiber content may be between 10 percent by weight and 90 percent by weight, preferably 30 percent by weight and 80 percent by weight in terms of mechanical properties and formability. A surface treating agent of the reinforcing fiber and a form (one direction, cross, NCF, nonwoven fabric, and the like) may not particularly be limited.

A prepreg sheet of the present invention can be obtained by a wet method or a hot melt method which is a conventional technique. The wet method is a method in which a radical polymerizable resin composition is dissolved in a solvent such as methyl ethyl ketone or toluene to lower the viscosity of the composition, impregnate the fiber, and followed by distilling off the solvent by heating to obtain a prepreg sheet. The type of the solvent is not particularly limited as long as it does not react with the isocyanate group. Although it depends on the kind of curing agent to be blended, those having a boiling point of 50 to 150 ° C, are preferred. In the hot melt method, a resin is applied to a resin film with a roll coater, and after that, reinforcing fibers are arranged, and heated and pressurized to obtain a prepreg sheet. These methods can be selected by the thickness and weaving of the fibers.

Further, the prepreg sheet of the present invention can be preferably used for fiber reinforced composite materials including carbon fiber reinforced plastics.

Moreover, as described above, as the fiber reinforced composite materials (including carbon fiber reinforced plastic) for a resin composition that can be used for the prepreg sheet of the present invention, a fiber-reinforced composite material for a resin composition (including carbon fiber reinforced plastics for a resin composition) comprising a urethane (meth) acrylate compound represented by the above-mentioned [Chemical 1] or [Chemical 4]. ) may be mentioned. As described above, also in this case, the isocyanate group in the urethane (meth) acrylate compound may preferably be between 0.1 percent by weight and 12 percent by weight.

Further, a method of producing a fiber-reinforced composite material of the present invention is characterized by including a step of curing a prepreg sheet of the present invention. The fiber-reinforced composite material of the present invention may be obtained by superimposing prepreg sheets obtained by the above-mentioned method, for example, until reaching a predetermined thickness, and heating and curing by applying heat and pressure. Examples of molding methods may be autoclave molding, oven molding, sheet winding molding, press molding and the like. The molding temperature may be between 60 °C and 200 °C, more preferably between 100 °C and 180 °C. A time length may be preferably between 1 minutes and 120 minutes, and the pressure may be preferably between -1 bar and 15 bar.

### Example

Hereinafter, the present invention will be described more specifically with reference to examples, but the present invention is not limited to the following examples. In this example, "parts" are parts by weight unless otherwise noted. The isocyanate group content in the synthesis example was determined by dissolving each resin in dry toluene, and followed by adding an excess of di-n-butylamine solution to react, and back-titrating the remaining di-n-butylamine with hydrochloric acid.

### [Synthesis Example 1]

### Synthesis of Urethane (Meth) Acrylate Resin

Into a reaction vessel, 535.3 parts of isophorone diisocyanate (manufactured by Evonik Industries AG), 130.0 parts of phenoxyethyl methacrylate (Light Ester PO, manufactured by Kyoeisha Chemical Co., Ltd.), 0.02 parts of dibutyltin dilaurate, 108.0 parts of 1,3-propanediol (manufactured by Du Pont), 226.4 parts of 2-hydroxyethyl methacrylate (manufactured by Mitsubishi Gas Chemical Company, Inc.), 0.04 parts of toluhydroquinone, and 0.26 parts of 4-methyl-2,6-di-tertialy-butylphenol were charged. The mixture was allowed to react at a temperature between 95 °C to 105 °C under an air flow (0.2 L/min). The reaction was traced by IR, and the point where the absorption of isocyanate group (near 2270 m - 1) became constant was regarded as the end point. The reaction took 3 hours. A urethane (meth) acrylate resin having an isocyanate group content of 1.0% by weight was obtained (the isocyanate group in the compound (a) was 1.2 percent by weight).

### [Synthesis Example 2]

### Synthesis of Urethane (Meth) Acrylate Resin

Into a reaction vessel, 530.6 parts of isophorone diisocyanate (manufactured by Evonik Industries AG), 130.0 parts of phenoxyethyl methacrylate (Light Ester PO manufactured by Kyoeisha Chemical Co., Ltd.), dibutyltin dilaurate, 0.02 parts of dibutyltin dilaurate, 112.7 parts of 1,3-propanediol (manufactured by Du Pont), 226.4 parts of 2-hydroxyethyl methacrylate (manufactured by Mitsubishi Gas Chemical Company, Inc.), 0.04 parts of toluhydroquinone, and 0.26 parts of 4-methyl-2,6-di-tert-butylphenol were charged. The mixture was allowed to react at a temperature between 95 °C and 105 °C under an air flow (0.2 L/min). The reaction was traced by IR, and the point where the absorption of isocyanate group (near 2270 m⁻¹) had become constant was regarded as the end point. The reaction took 3 hours. A urethane (meth) acrylate resin having an isocyanate group content of 0.3 percent by weight was obtained (the isocyanate group in the compound (a) was 0.35 percent by weight).

### [Synthesis Example 3]

### Synthesis of Urethane (Meth) Acrylate Resin

Into a reaction vessel, 571.1 parts of isophorone diisocyanate (manufactured by Evonik Industries AG), 100.0 parts of phenoxyethyl methacrylate (Light Ester PO, manufactured by Kyoeisha Chemical Co., Ltd.), 0.02 parts of dibutyltin dilaurate, 55.3 parts of 1,3-propanediol (manufactured by Du Pont), 273.3 parts of 2-hydroxyethyl methacrylate (manufactured by Mitsubishi Gas Chemical Company, Inc.), 0.04 parts of toluhydroquinone, and 0.26 parts of 4-methyl-2,6-di-tert-butylphenol were charged. The mixture was allowed to react at a temperature between 95 °C and 105 °C under an air flow (0.2 L/min). The reaction was traced by IR, and the point where the absorption of isocyanate group (near 2270 m⁻¹) had become constant was regarded as the end point. The reaction took 3 hours. A urethane (meth) acrylate resin having an isocyanate group content of 6.4 percent by weight was obtained (the isocyanate group in the compound (a) was 7.4 percent by weight).

### [Synthesis Example 4]

### Synthesis of Urethane (Meth) Acrylate Resin

Into a reaction vessel, trimer of isophorone diisocyanate (manufactured by Evonik KK), 140.0 parts of phenoxyethyl methacrylate (Light Ester PO manufactured by Kyoeisha Chemical Co., Ltd.), 0.02 parts of dibutyltin dilaurate, 248.2 parts of pentaerythritol triacrylate (Aronix M-305, manufactured by Toagosei Co., Ltd.), 139.8 parts of 2-hydroxyethyl methacrylate (manufactured by Mitsubishi Gas Chemical Company, Inc.), 0.04 parts of toluhydroquinone, 0.26 parts of 4-methyl-2,6-di-tert-butylphenol were charged. The reaction was carried out while keeping the temperature at between 95 °C and 105 °C under an air flow (0.2 L/min). The reaction was traced by IR, and the point where the absorption of isocyanate group (near 2270 m - 1) had become constant was regarded as the end point. The reaction took 2.5 hours. A urethane (meth) acrylate resin having an isocyanate group content of 1.7 percent by weight was obtained (the isocyanate group in the compound (a) was 1.97 percent by weight).

### [Synthesis Example 5]

### Synthesis of Urethane (Meth) Acrylate Resin

Into a reaction vessel, 529.7 parts of isophorone diisocyanate (manufactured by Evonik Industries AG), 130.0 parts of phenoxyethyl methacrylate (Light Ester PO manufactured by Kyoeisha Chemical Co., Ltd.), 0.02 parts of dibutyltin dilaurate, 115.0 parts of 1,3-propanediol (manufactured by Du Pont), 225.0 parts of 2-hydroxyethyl methacrylate (manufactured by Mitsubishi Gas Chemical Company, Inc.), 0.04 parts of toluhydroquinone, and 0.26 parts of 4-methyl-2,6 di-tert-butylphenol were charged. The mixture was allowed to react at a temperature between 95 °C and 105 °C under an air flow (0.2 L/min). The reaction was traced by IR, and the point where the absorption of isocyanate group (near 2270 m⁻¹) had become constant was regarded as the end point. The reaction took 3 hours. A urethane (meth) acrylate resin having an isocyanate group content of 0.06 percent by weight was obtained (the isocyanate group in the compound (a) was 0.067 percent by weight).

### [Synthetsis Example 6]

### Synthesis of Urethane (Meth) Acrylate Resin

Into a reaction vessel, 620.0 parts of isophorone diisocyanate (manufactured by Evonik Industries AG), 100.0 parts of phenoxyethyl methacrylate (Light Ester PO manufactured by Kyoeisha Chemical Co., Ltd.), 0.02 parts of dibutyltin dilaurate, 29.3 parts of 1,3-propanediol (manufactured by Du Pont), 250.4 parts of 2-hydroxyethyl methacrylate (manufactured by Mitsubishi Gas Chemical Company, Inc.), 0.04 parts of toluhydroquinone, and 0.26 parts of 4-methyl-2,6-di-tert-butylphenol were charged. The mixture was allowed to react at a temperature of between 95 °C and 105 °C under an air flow (0.2 L/min). The reaction was traced by IR, and the point where the absorption of isocyanate group (near 2270 m⁻¹) had become constant was regarded as the end point. The reaction took 3 hours. A urethane (meth) acrylate resin having an isocyanate group content of 12.1 percent by weight) was obtained (the isocyanate group in the compound (a) was 13.5 percent by weight).

### [Synthesis Example 7]

### Synthesis of Epoxy Acrylate Resin

Into a reaction vessel, 689.9 parts of a bisphenol A type epoxy compound (JER "# 1001"), 127.6 parts of methacrylic acid, 1.64 parts of 2-methylimidazole, 0.82 parts of monomethyl ether hydroquinone were charged, And the mixture was reacted under air flow (0.2 L min) at a temperature of 110 to 120 °C for 10 hours. Thereafter, it was diluted with 180.0 parts of phenoxyethyl methacrylate (Light Ester PO (R) manufactured by Kyoeisha Chemical Co., Ltd.) to obtain an epoxy acrylate resin having an acid value of 2.4 mg / KOH.

### [Synthesis Example 8]

### Synthesis of Epoxy Acrylate Resin

Into a reaction vessel, 622.3 parts of a novolak type epoxy compound (Epiclon (R) "N-740" manufactured by DIC), 294.0 parts of methacrylic acid, 2.75 parts of triphenylphosphine, 0.91 parts of toluhydroquinone were charged. The mixture was reacted under air flow (0.2 L/min) at a temperature between 110 °C and 120 °C for 8 hours. Thereafter, the mixture was diluted with 80.0 parts of phenoxyethyl methacrylate (Light Ester PO (R), manufactured by Kyoeisha Chemical Co., Ltd.) to obtain an epoxy acrylate resin having an acid value of 3.8 mg/KOH.

### [Synthetic Example 9]

### Synthesis of Unsaturated Polyester Resin

In a reaction vessel, 360 parts of phthalic anhydride, 282 parts of fumaric acid, 90 parts of ethylene glycol and 399 parts of propylene glycol were chargded. The mixture was stirred to carry out polycondensation reaction at 210 deg C for 11 hours under a nitrogen flow (0.5 L/min). After the end of the reaction, the mixture was diluted with 430 parts of a styrene monomer to obtain an unsaturated polyester resin.

### [Synthetic Example 10]

### Synthesis of Urethane (Meth) Acrylate Resin

Into a reaction vessel, 615.3 parts of isophorone diisocyanate (manufactured by Evonik Industries AG), 0.02 parts of dibutyltin dilaurate, 124.2 parts of 1,3-propanediol (manufactured by DuPont) , 260.2 parts of 2-hydroxyethyl methacrylate (manufactured by Mitsubishi Gas Chemical Company, Inc.), 0.05 parts of toluhydroquinone, and 0.30 parts of 4-methyl-2,6-di-tert-butylphenol were charged. The mixture was reacted at a temperature between 105 °C and 115 °C under air flow (0.2 L/min). The reaction was traced by IR, and the point where the absorption of isocyanate group (near 2270 m⁻¹) had become constant was regarded as the end point. The reaction took 3 hours. A urethane (meth) acrylate resin having an isocyanate group content of 1.2 percent by weight was obtained.

### [Synthesis Example 11]

### Synthesis of Urethane (Meth) Acrylate Resin

Into a reaction vessel, 504.5 parts of isophorone diisocyanate (manufactured by Evonik Industries AG), 180.0 parts of phenoxyethyl methacrylate (Light Ester PO manufactured by Kyoeisha Chemical Co., Ltd.), 0.02 parts of dibutyltin dilaurate, 101.8 parts of 1,3-propanediol (manufactured by Du Pont), 213.3 parts of 2-hydroxyethyl methacrylate (manufactured by Mitsubishi Gas Chemical Company, Inc.), 0.04 parts of toluhydroquinone, and 0.25 parts of 4-methyl-2,6-di-tert-butylphenol were charged. The mixture was reacted under a stream of air (0.2 L/min) at a temperature between 95 °C and 105 °C. The reaction was traced by IR, and the point where the absorption of isocyanate group (near 2270 m⁻¹) had become constant was regarded as the end point. The reaction took 3 hours. A urethane (meth) acrylate resin having an isocyanate group content of 0.98 percent by weight was obtained (the isocyanate group in the compound (a) was 1.2 percent by weight).

### Preparation of Radically Polymerizable Composition

To 100 parts of each of the resins of Synthesis Examples 1 to 6, 10 and 11, 0.02 parts of dibutyltin laurate as an accelerator, and PERBUTYL E (a peroxy ester type manufactured by NOF Corporation) as a curing agent were added and a radical polymerizable resin composition for a prepreg sheet was obtained. To each of the resins of Synthesis Examples 7 to 9, 1.5 parts of PERBUTYL E (a peroxy ester type manufactured by NOF Corporation) as a curing agent were added and a radical polymerizable resin composition for a prepreg sheet was obtained.

### Epoxy Composition Preparation

5 parts of dicyandiamide and 4 parts of urea derivative were blended with 100 parts of bisphenol A type epoxy resin blend (Epikote (R) # 1001/828 = 50/50 made by Japan Epoxy Resin) to obtain an epoxy resin composition.

### Production of prepreg sheet

The above-prepared radical polymerizable resin composition was applied to a release paper with a roll coater heated to 80 °C to obtain a resin film. Next, carbon fibers (plain weave TORAYCA (R) T700) were arranged in one direction on the resin film, and the release paper was placed thereon. Thereafter, a roller heated to 90 °C was subjected to a through pressure to impregnate the resin. One side of the release paper was peeled off, and a polyethylene film was placed thereon to obtain a prepreg sheet having a resin weight content between 33 percent and 35 percent. The prepreg sheets using the resins of synthesis Examples 1 through 6, 10 and 11 were designated as (a-1 through a-6, a-10, a-11), the prepreg sheets using the resins of Synthesis Examples 7 to 9 as (b-1 through b-3), and the prepreg sheet of the epoxy resin composition as (c-1).

For each prepreg sheet, the molding time was varied, press molding was carried out, a test piece was cut out from the obtained plate, and a series of testing flexural strength (JIS K 7074), interlaminar shear strength (JIS K 7078) and dynamic viscoelasticity was carried out. Regarding the nature under a certain storage condition, tackiness, appearance after molding and mechanical properties were inspected. With the condition was storing at 23 deg C for 3 months, tackiness, appearance of the molded sheet and the mechanical properties were inspected.
Tackiness: the state immediately after preparing a prepreg sheet was used as the standard.
The symbol "∘" means that tackiness was maintained.
The symbol "△" means that viscosity was increased and tackiness was slightly decreased.
The symbol "×" means that viscosity was more increased and tackiness is lost. The appearance after molding was visually evaluated; "∘" (good) is better than "△" (not good, or in between good and bad) and "△" is better that "×" (bad).

### Preparation of Test Specimen for Mechanical Property Examination

Eleven of the prepreg sheets obtained above were stacked and press-molded at a molding temperature of 130 °C and a molding pressure of 4 bar. Table 1 shows molding time and mechanical properties, Table 2 shows storability, and Table 3 shows tackiness results.

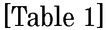

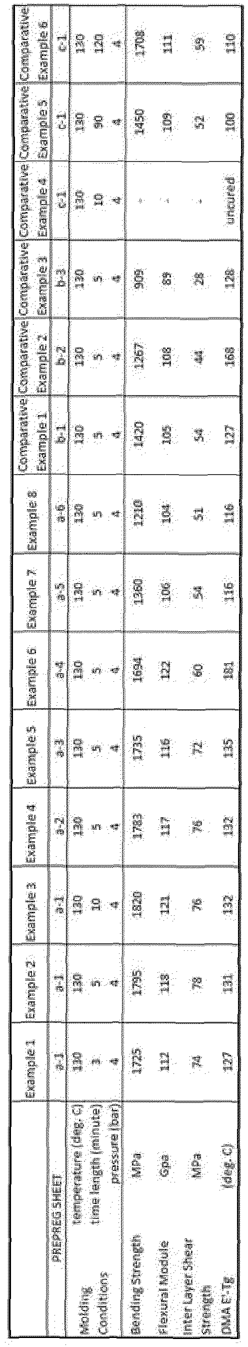

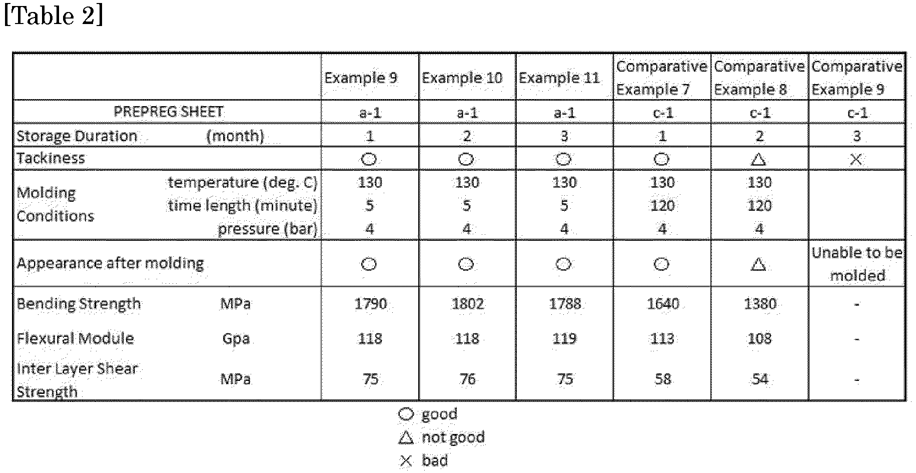

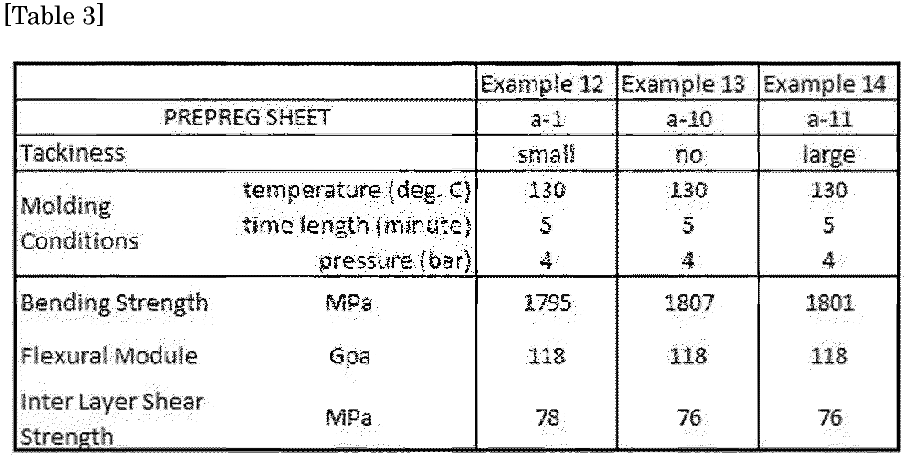

### Further, FIG. 1 shows an IR chart of the reaction end point of Synthesis Example 1.

The mechanical properties of the CFRPs obtained in Examples 1 to 3 obviously improved their strengths in comparison with Comparative Examples 1 to 6. Example 4 having high heat resistance also showed better mechanical properties than Comparative Example 2 exhibiting similar heat resistance. When comparing Examples 1 to 3 and Comparative Examples 5 and 6 in curing time, Examples 1 to 3 showed excellent curability. Moreover, in Table 1, DMA stands for Dynamic Mechanical Analysis. Moreover, it was shown that the nature after storage of Examples 1 to 3 was also better than the comparative examples. From Table 3, it was shown that the tackiness of the prepreg sheet can be adjusted depending on the amount of the polymerizable vinyl monomer, while maintaining excellent mechanical properties.

### Industrial Applicability

Since the radical polymerizable resin composition and the prepreg sheet of the present invention are lightweight and high in strength, they can be used in a wide variety of fields including transportation equipment, industrial materials, reinforcement materials for civil engineering, sports equipment and the like. Note that the scope of application is not limited to these.

## Claims

1. A prepreg sheet obtained by impregnating a fiber with a radical polymerizable resin composition, wherein the radical polymerizable resin composition contains at least a urethane (meth) acrylate compound (a) represented by the following chemical formula [Chemical 1]: 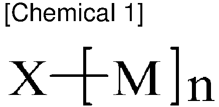 in the formula [Chemical 1], wherein n is within a range from 2 to 100, X is a compound residue having two or more isocyanate groups M, and M contains a formula [Chemical 2]:
[Chemical 2] -N=C=O
and a formula [Chemical 3]: 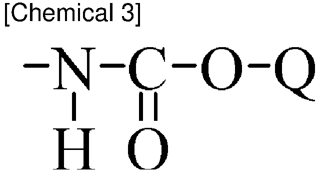 in the formula [Chemical 3], Q represents a residue of a hydroxyl group containing (meth) acrylate ester and the radical polymerizable resin composition further optionally contains a polymerizable vinyl monomer in an amount of 0 to 50 percent by weight and wherein the urethane (meth) acrylate compound (a) contains 0.1 to 12 percent by weight of an isocyanate group.

2. A prepreg sheet according to claim 1 wherein the chemical formula [Chemical 1] is represented by the following chemical formula [Chemical 4]: 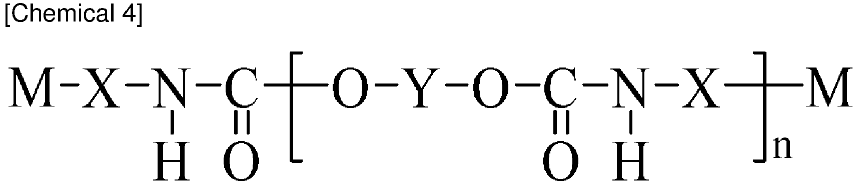 in the formula, wherein n is within a range from 1 to 5000, X is a compound residue having two or more isocyanate groups, Y is an alcohol compound residue having two or more hydroxyl groups and M contains a formula [Chemical 5]:
[Chemical 5] -N=C=O
and other than the above formula [Chemical 5] M is formula [Chemical 6]: 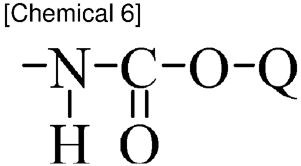 Moreover, in the formula [Chemical 6], Q represents a mono alcohol compound residue containing ethylenically unsaturated groups.

3. A prepreg sheet according to any one of claims 1 through 2, wherein the polymerizable vinyl monomer in the radical polymerizable resin composition, when present, includes one or more kinds selected from phenoxyethyl methacrylate, benzyl methacrylate, isobornyl methacrylate, tricyclodecanedimethanol dimethacrylate.

4. A method for manufacturing a fiber-reinforced composite material, comprising a step of curing the prepreg sheet according to any one of claims 1 through 3.

## Patentansprüche

1. Eine Prepreg-Folie, erhalten durch Imprägnieren einer Faser mit einer Zusammensetzung eines radikalisch polymerisierbaren Harzes, wobei die Zusammensetzung des radikalisch polymerisierbaren Harzes mindestens eine Urethan(meth)acrylat-Verbindung (a), dargestellt durch die folgende chemische Formel [Chemikalie 1], enthält 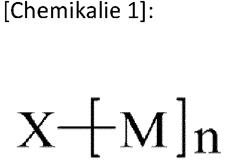 wobei in der Formel [Chemikalie 1], n innerhalb eines Bereichs von 2 bis 100 liegt, X ein Verbindungsrest mit zwei oder mehr Isocyanatgruppen M ist und M eine Formel [Chemikalie 2]:
[Chemikalie 2] -N=C=O
und eine Formel [Chemikalie 3] enthält: 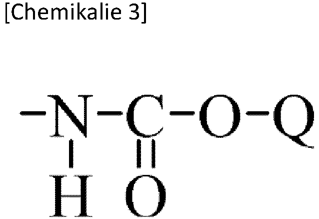 wobei in der Formel [Chemikalie 3] Q einen Rest eines Hydroxylgruppe enthaltend (Meth)acrylatesters darstellt und die Zusammensetzung des radikalisch polymerisierbaren Harzes ferner gegebenenfalls ein polymerisierbares Vinylmonomer in einer Menge von 0 bis 50 Gew.-% enthält und wobei die Urethan(meth)acrylat-Verbindung (a) 0,1 bis 12 Gew.-% einer Isocyanatgruppe enthält.

2. Eine Prepreg-Folie gemäß Anspruch 1, wobei die chemische Formel [Chemikalie 1] durch die folgende chemische Formel [Chemikalie 4] dargestellt ist: 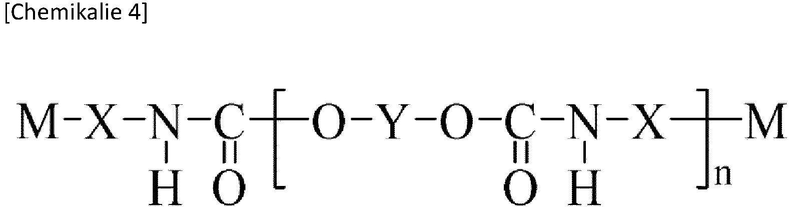 wobei in der Formel, n innerhalb eines Bereichs von 1 bis 5000 liegt, X ein Verbindungsrest mit zwei oder mehr Isocyanatgruppen ist, Y ein Alkoholverbindungsrest mit zwei oder mehr Hydroxylgruppen ist und M eine Formel [Chemikalie 5] enthält:
[Chemikalie 5] -N=C=O
und wenn sie von der vorstehenden Formel [Chemikalie 5] verschieden ist, M die Formel [Chemikalie 6] ist: 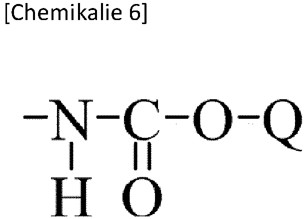 weiterhin stellt Q in der Formel [Chemikalie 6] einen Monoalkoholverbindungsrest dar, welcher ethylenisch ungesättigte Gruppen enthält.

3. Eine Prepreg-Folie gemäß einem der Ansprüche 1 bis 2, wobei das polymerisierbare Vinylmonomer in der Zusammensetzung des radikalisch polymerisierbaren Harzes, falls vorhanden, eine oder mehrere Arten, ausgewählt aus Phenoxyethylmethacrylat, Benzylmethacrylat, Isobornylmethacrylat, Tricyclodecandimethanoldimethylacrylat, beinhaltet.

4. Ein Verfahren zur Herstellung eines faserverstärkten Verbundmaterials, umfassend einen Schritt des Härtens der Prepreg-Folie gemäß einem der Ansprüche 1 bis 3.

## Revendications

1. Feuille préimprégnée obtenue par imprégnation d'une fibre avec une composition de résine polymérisable par voie radicalaire, dans laquelle la composition de résine polymérisable par voie radicalaire contient au moins un composé (méth)acrylate d'uréthane (a) représenté par la formule chimique suivante [Produit chimique 1] : 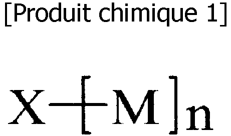 dans la formule [Produit chimique 1], dans laquelle n est dans une plage de 2 à 100, X est un résidu de composé ayant deux ou plusieurs groupes isocyanate M, et M contient une formule [Produit chimique 2] :
[Produit chimique 2] -N=C=O
et une formule [Produit chimique 3] : 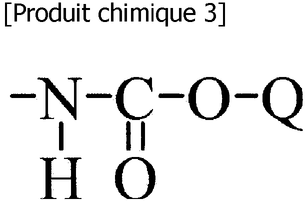 dans la formule [Produit chimique 3], Q représente un résidu d'un ester (méth)acrylate contenant un groupe hydroxyle, et la composition de résine polymérisable par voie radicalaire contient éventuellement en outre un monomère vinylique polymérisable en une quantité de 0 à 50 pour cent en poids, et dans laquelle le composé (méth)acrylate d'uréthane (a) contient de 0,1 à 12 pour cent en poids d'un groupe isocyanate.

2. Feuille préimprégnée selon la revendication 1, dans laquelle la formule chimique [Produit chimique 1] est représentée par la formule chimique suivante [Produit chimique 4] : 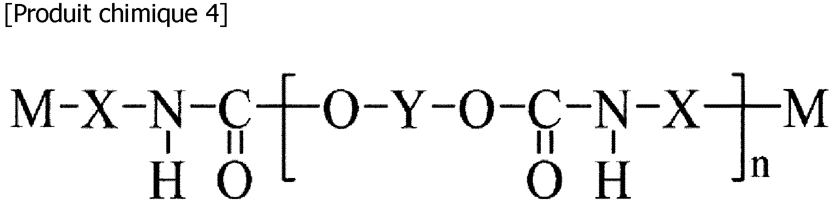 dans la formule, dans laquelle n est dans une plage de 1 à 5000, X est un résidu de composé ayant deux ou plusieurs groupes isocyanate, Y est un résidu de composé alcool ayant deux ou plusieurs groupes hydroxyle et M contient une formule [Produit chimique 5] :
[Produit chimique 5] -N=C=O
et, autre que la formule [Produit chimique 5] ci-dessus, M est la formule [Produit chimique 6] : 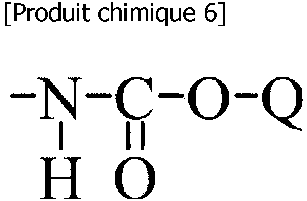 de plus, dans la formule [Produit chimique 6], Q représente un résidu de composé monoalcool contenant des groupes éthyléniquement insaturés.

3. Feuille préimprégnée selon l'une quelconque des revendications 1 à 2, dans laquelle le monomère vinylique polymérisable dans la composition de résine polymérisable par voie radicalaire, lorsqu'il est présent, inclut un ou plusieurs types choisis parmi le méthacrylate de phénoxyéthyle, le méthacrylate de benzyle, le méthacrylate d'isobornyle, le diméthacrylate de tricyclodécanediméthanol.

4. Procédé de fabrication d'un matériau composite renforcé de fibres, comprenant une étape de durcissement de la feuille préimprégnée selon l'une quelconque des revendications 1 à 3.
